# EUROPEAN PATENT APPLICATION

(11) **EP 2 428 909 A1**
(43) Date of publication of application: **14.03.2012**
(21) Application number: 11180159.3
(22) Date of filing: 06.09.2011
(51) Int. Cl.: G06F 21/00

(54) **System recovery method and computing apparatus having system recovery function**

(30) Priority: 13.09.2010 KR 20100089698
(71) Applicant: SAMSUNG ELECTRONICS CO., LTD., Suwon-si Gyeonggi-do 442-742 (KR)
(72) Inventor: Kim, Bum-keun, Gyeonggi-do (KR)
(74) Representative: Beck, Michaël Andries T

(57) **Abstract**

A system recovery method and a computing apparatus having a system recovery function. The computing apparatus includes a first memory unit to store a general operating system (OS) in a system partition where a primary anti-virus program operates, and to store a recovery OS in a recovery partition where a secondary anti-virus program operates; a second memory unit to store firmware determining a booting partition of the computing apparatus; and a processor to control execution of the firmware to, when the system partition is infected by a virus and thus the computing apparatus does not boot to the general OS, boot the computing apparatus to the recovery OS, and to control recovery of the system partition.

## Description

### CROSS-REFERENCE TO RELATED APPLICATIONS

This application claims the benefit of Korean Patent Application No. 10-2010-0089698, filed on September 13, 2010, in the Korean Intellectual Property Office, the disclosure of which is incorporated herein in its entirety by reference.

### BACKGROUND OF THE INVENTION

### 1. Field of the Invention

The present general inventive concept relates to a system recovery method and a computing apparatus having a system recovery function, and more particularly, to a system recovery method using an anti-virus program and a computing apparatus having a system recovery function.

### 2. Description of the Related Art

As computers become more popular, more work is being done by computers. Thus, important information is mostly/often stored in computers. However, data stored in computers is often damaged or lost due to software errors, operating system errors, or user mistakes. In particular, when a computer is infected by a computer virus (hereinafter, referred to as a "virus"), the virus affects normal operations of the computer, thereby damaging data stored in the computer. Anti-virus programs check and remove viruses with respect to files infected by the viruses. In general, an anti-virus program is executed on an operating system (OS) of a computer. Accordingly, before an anti-virus program is executed, a computer should be booted to an OS used by a user. However, there are viruses that fatally damage an OS, and when a computer is infected by such a virus, the computer cannot be booted. Therefore, since an anti-virus program cannot be executed on an OS, viruses of the corresponding OS cannot be removed, and consequently, the OS and all data stored by the user have to be deleted regardless of a user's intention, and the computer needs to be recovered and restored.

### SUMMARY OF THE INVENTION

The present inventive concept provides a system recovery method and a computing apparatus having a system recovery function.

Additional features and utilities of the present general inventive concept will be set forth in part in the description which follows and, in part, will be obvious from the description, or may be learned by practice of the general inventive concept.

Embodiments of the general inventive concept provide a computing apparatus having a system recovery function, the computing apparatus including: a first memory unit to store a general operating system (OS) in a system partition where a primary anti-virus program operates, and to store a recovery OS in a recovery partition where a secondary anti-virus program operates; a second memory unit to store firmware determining a booting partition of the computing apparatus; and a processor to control execution of the firmware to, when the system partition is infected by a virus and thus the computing apparatus does not boot to the general OS, boot the computing apparatus to the recovery OS, and to control recovery of the system partition.

Embodiments of the general inventive concept also provide a system recovery method in a computing apparatus, the method including: when a general OS where a primary anti-virus program operates is infected by a virus and thus the computing apparatus does not boot to the general OS, determining a booting partition of the computing apparatus to be such that the computing apparatus is booted by a recovery OS where a secondary anti-virus program operates; checking and removing the virus with respect to a system partition in which the general OS is stored, by using the secondary anti-virus program; and recovering the system partition according to a result of the virus check and removal, wherein the computing apparatus includes a first memory unit to store the system partition and a recovery partition in which the recovery OS is stored, and a second memory unit to store firmware for determining the booting partition.

Embodiments of the general inventive concept also provide a method of recovering an operating system of a computer apparatus, including: determining whether a user selected a first option from among at least two options to restore one or more files; using a secondary anti-virus program to analyze log data in a profile and log repository file if it is determined that the first option was selected; restoring the one or more files included in a recovery data image portion of memory based on the analysis of the log data; and recovering a system partition based on the restored one or more files.

### BRIEF DESCRIPTION OF THE DRAWINGS

The above and other features and utilities of the present general inventive concept will become more apparent by the following description of the exemplary embodiments thereof with reference to the attached drawings in which:

FIG. 1 is a block diagram illustrating a computing apparatus, according to an embodiment of the present general inventive concept;

FIG. 2 is a table regarding a partition table generally used, according to an embodiment of the present general inventive concept;

FIG. 3A is a table illustrating fields of a virus profile, according to an embodiment of the present general inventive concept;

FIG. 3B is a table illustrating fields of log data, according to an embodiment of the present general inventive concept;

FIG. 4 is a block diagram illustrating operations of operating systems for recovering a system of a computing apparatus, according to an embodiment of the present general inventive concept;

FIG. 5 is a flowchart of a system recovery method in a computing apparatus, according to an embodiment of the present general inventive concept;

FIG. 6 is a detailed flowchart of the system recovery method of FIG. 5; and

FIG. 7 is a flowchart of a system recovery method when a computing apparatus is booted to a recovery operating system, according to an embodiment of the present general inventive concept.

### DETAILED DESCRIPTION OF THE PREFERRED EMBODIMENTS

The present invention will now be described more fully with reference to the accompanying drawings, in which exemplary embodiments of the present invention are shown.

Reference will now be made in detail to the embodiments of the present general inventive concept, examples of which are illustrated in the accompanying drawings, wherein like reference numerals refer to the like elements throughout. The embodiments are described below in order to explain the present general inventive concept while referring to the figures.

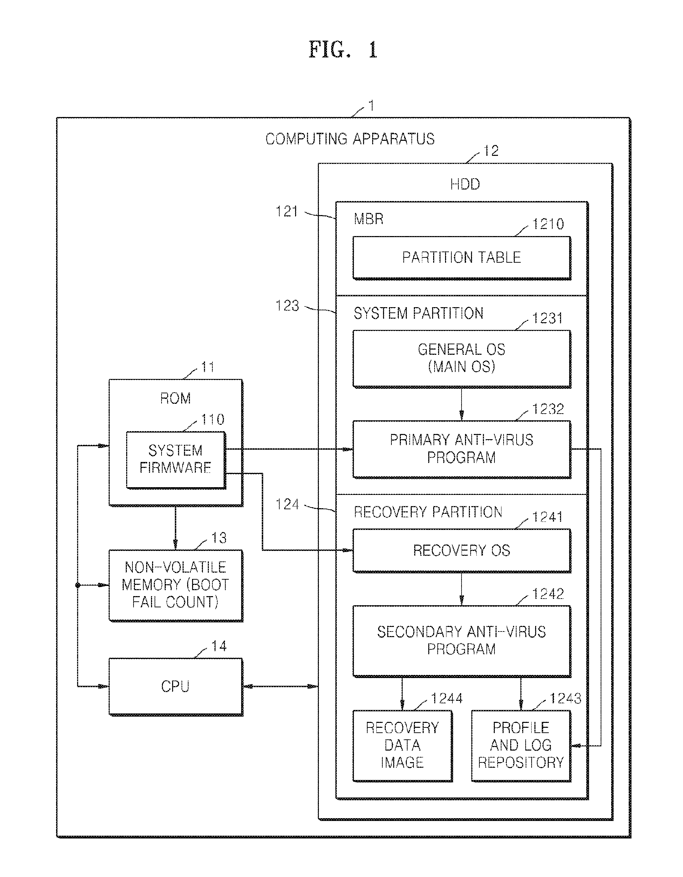

FIG. 1 is a block diagram illustrating a computing apparatus 1, according to an embodiment of the present invention. Referring to FIG. 1, the computing apparatus 1 includes a read only memory (ROM) 11, a hard disk drive (HDD) 12, a non-volatile memory 13, and a central processing unit (CPU) 14. The computing apparatus 1 means all apparatuses having a function of a general computer. For example, the computing apparatus 1 may include a personal computer (PC) such as a desktop computer or a laptop computer.

In the following description, only hardware components that are related to the present embodiment are described so as to prevent the present embodiment from being obscured. However, it will be understood by one of ordinary skill in the art that the computing apparatus 1 may include general-use hardware components other than the hardware components illustrated in FIG. 1, such as input apparatuses (a keyboard and a mouse), a random access memory (RAM), and an optical disk drive (ODD), among other devices.

Recently, many kinds of computer viruses (hereinafter, referred to as "viruses"), malignant codes, and spywares have been created, and computers are often infected by such computer viruses without users even realizing it. Viruses modify computer programs or executable parts of computers, and copy themselves or their modifications to other parts or programs of the computers, thereby affecting operations of the computers. Malignant codes and spywares may have characteristics different from those of viruses, but are similar to viruses in that both may detrimentally affect computers, and thus they will be referred to as viruses as well in the present embodiment.

Viruses can enter computers in many different ways. For example, most computers are equipped with an internet connection, whether it be wireless or via a wired connection. At home, the computers usually obtain their internet access via a service provider, and those service providers usually provide "firewalls" that usually do a very good job of protecting home computers from viruses that may try to enter the user's home computer through the internet, whether in a wired or wireless manner. Computers for use at the user's place of business may also be connected to one or more different types of networks, including a local area network, a wide area network, among others (hereinafter "business networks"). The business networks can be connected to the internet, thereby creating a network of networks, and each business network is, of course, connected to many other different computers. The user's business network can also have its own firewall that can assist in preventing viruses from entering the user's computer. Another way for viruses to enter a user's computer, though this is much rarer at this time, is for corrupt files to be manually input into a computer. Usually viruses try and enter a user's computer through either electronic mail, or via access to different websites.

When the computing apparatus 1 is infected by a virus, the virus affects normal operations of the computing apparatus 1, thereby damaging data stored in the computing apparatus 1. An anti-virus program removes the virus by deleting only a virus code with respect to a file infected by the virus or deleting the infected file. However, malignant viruses have appeared recently that threaten the stability of a system of an operating system (OS) by infecting a file related to the system. Accordingly, when an important system file used to boot an OS is infected by a virus, an anti-virus program may not be executed in the OS, and thus the virus may not be removed. Thus, a user may not use data stored in a computer in which an important system file is infected. Conventionally, in order to solve the above problem, the entire OS should be recovered and restored, and thus all data of a user in the OS should be deleted.

The computing apparatus 1 according to the present exemplary embodiment divides an HDD into a plurality of partitions, in which an OS is installed in each of the partitions, and additionally installs an anti-virus program executable in each OS installed in each of the partitions, so that, even if a main OS is damaged, viruses of the main OS are checked and removed by using an anti-virus program executed on another OS and so that a user may remove only files infected by viruses. Furthermore, according to an exemplary embodiment, only files infected by viruses need to be recovered by linking a recovery solution having a function of recovering an OS with an anti-virus program (although other files may also be recovered), and thus there is no need to recover and restore an entire OS and no need to delete all data of a user.

Hereinafter, configuration and operations of the computing apparatus 1 having the above functions will be described in detail.

The ROM 11, which is a non-volatile memory, is a semiconductor memory that may only read data. The ROM 11 corresponds to a main memory unit in the computing apparatus 1. A system firmware (F/W) 110 is stored in the ROM 11. The system firmware 110 determines a booting partition of the computing apparatus 1. The booting partition means a partition to be used in booting, from among a plurality of partitions stored in the HDD 12, which corresponds to a secondary memory unit.

In detail, the system firmware 110 is in charge of initialization and booting of a system when starting booting of the computing apparatus 1, and includes a Basic Input Output System (BIOS), an extensible firmware interface (EFI), etc., of a general PC. In general, the system firmware 110 determines a booting partition that performs booting with reference to a boot indicator of a partition table 1210 of the HDD 12 after the initialization of the system is finished.

According to the present exemplary embodiment, a user may select the booting partition at his or her discretion by inputting a specific key or in a booting menu, and the system firmware 110 determines the selected partition as the booting partition. That is, a user can predetermine to boot to a general OS 1231 by taking no action upon initialization, or a user can predetermine to cause the system to go directly to recovery OS 1241 upon the pressing of a key, for example an F1 or F2 key at a certain point upon initialization. A user may select to do this if the user suspects, or knows, that the system is corrupted by a virus. This can happen, for example, of the system operates slower than normal during a previous use, or if erroneous operations had occurred (perhaps causing the computer system to shut down, or "freeze up"). Further, an input key may be used to cause the initialization to stop and display a booting menu, wherein the user may have one or more options in terms of how to boot the system. One such option can include a boot to recovery OS 1241.

Furthermore, according to the present exemplary embodiment, the system firmware 110 may determine the booting partition by checking a boot fail count representing a value obtained by counting the number of times booting of the computing apparatus 1 has failed. That is, when a boot fail count exceeds a threshold value that is designated by user, the computing apparatus 1 is automatically booted to a recovery OS 1241 that is stored in the HDD 12 and has a function of performing virus check and file recovery therein.

The non-volatile memory 13 stores the boot fail count. The boot fail count means a value obtained by counting the number of times that the computing apparatus 1 tries to be booted to a general OS 1231 stored in the HDD 12. In this regard, the non-volatile memory 13 may maintain stored information even when power is not supplied to the computing apparatus 1, and may use the stored information when power is supplied to the computing apparatus 1. The non-volatile memory 13 may, for example, be a readable and writable RAM. However, the non-volatile memory 13 may not include a ROM.

The system firmware 110 increases the boot fail count by 1 before attempting to boot the computing apparatus 1 to the general OS 1231. If booting of the computing apparatus 1 is finished, the boot fail count is initialized to 0 by a primary anti-virus program 1232 operating in the general OS 1231. Accordingly, if the computing apparatus 1 does not boot to the general OS 1231, the primary anti-virus program 1232 is not executed, and the boot fail count is increased. The system firmware 110 checks the boot fail count stored in the non-volatile memory 13 before starting booting, and thus the system firmware 110 may determine whether the computing apparatus 1 may be normally booted to the general OS 1231. If the computing apparatus 1 may not be booted to the general OS 1231, the booting partition is determined to be such that the computing apparatus 1 is automatically booted to the recovery OS 1241, thereby performing virus check.

The HDD 12 corresponds to the secondary memory unit of the computing apparatus 1. The HDD 12 is generally used as the secondary memory unit as in the present exemplary embodiment. However, use of a solid state drive (SSD), instead of a HDD has recently increased. The present exemplary embodiment is described in accordance with the secondary memory unit as the HDD 12, but the present general inventive concept is not limited thereto.

The HDD 12 stores a master boot record (MBR) 121, the partition table 1210, and a plurality of partitions 123 and 124. In this regard, structures of the MBR 121, the partition table 1210, and the partitions 123 and 124 may be changed according to an architecture of a PC. In addition, the number and form of partitions may be different according to whether the partition table 1210 is used. Each of the partitions 123 and 124 may include a system software (S/W), such as an OS, or may store only data. In the present exemplary embodiment, only one system partition 123 and one recovery partition 124 will be described for the dual purposes of brevity and clarity.

The MBR 121, which is placed in a first sector of the HDD 12, stores a bootstrap code executable by the system firmware 110 such as a BIOS after booting, important information used by an OS, and the partition table 1210.

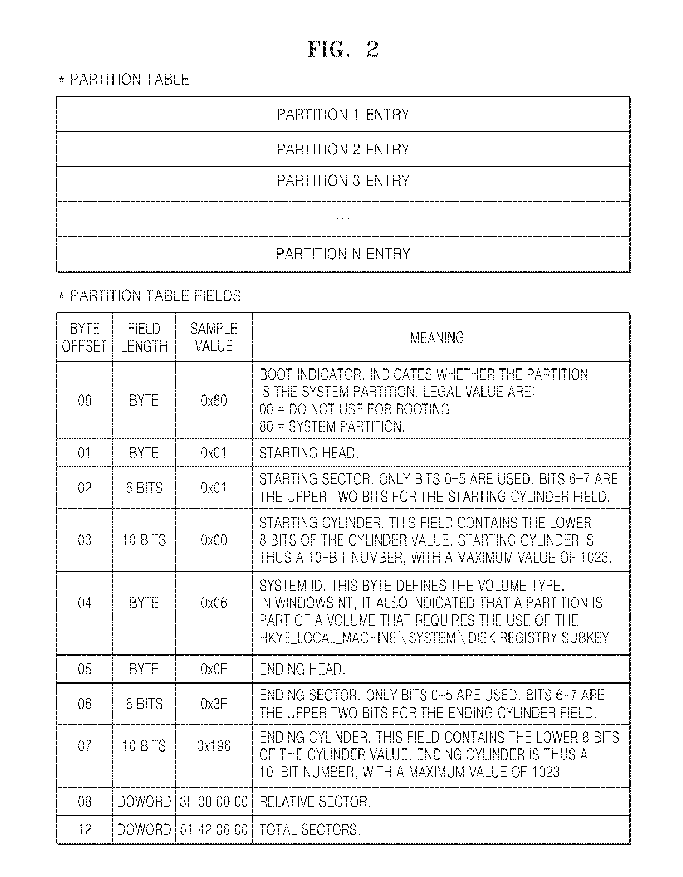

FIG. 2 is a table regarding a partition table generally used, according to an exemplary embodiment of the present general inventive concept. Referring to FIG. 2, when the computing apparatus 1 is booted to the recovery OS 1241, a boot indicator of the partition 124, which corresponds to the recovery OS 1241, in the partition table 1210 indicates a recovery partition so as to boot the computing apparatus 1 to the recovery OS 1241. The MBR 121 and the partition table 1210 are known to those of ordinary skill in the art, and thus a detailed description thereof will be omitted here.

Referring back to FIG. 1, the system partition 123 stores the general OS 1231 in which the primary anti-virus program 1232 operates, and the recovery partition 124 stores the recovery OS 1241 in which a secondary anti-virus program 1242 operates.

The general OS 1231 refers to an OS supporting an apparatus and a function in an unrestricted manner in a general user environment. For example, the general OS 1231 may be Microsoft Windows, Linux, or UNIX, among other types of operating systems.

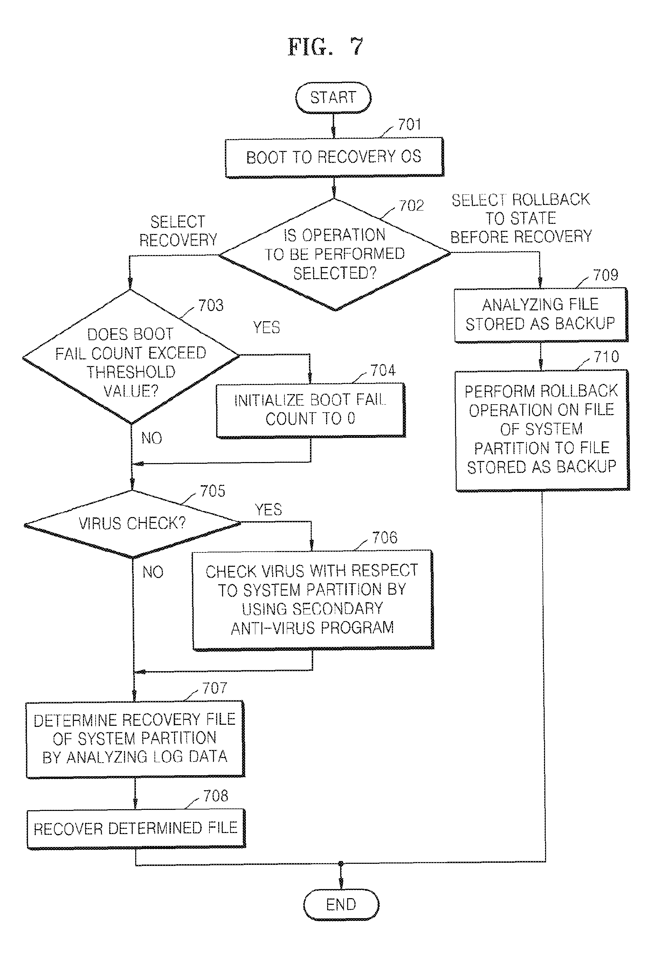

The recovery OS 1241 provides limited functionality and an execution environment for only recovery, restoration, virus search, and virus removal. That is, the recovery partition 124 in which the recovery OS 1241 is stored has limited access to a system, and operations on the recovery OS 1241, other than virus check, virus removal, and restoration, are limited. According to a further exemplary embodiment, the recovery or restoration of general operating system 1231 can occur by a rollback operation, discussed in greater detail below in regard to FIG. 7, wherein one or more booting files found to be infected with viruses can be recovered or restored from a previous copy stored in a separate portion of recovery partition 124.

In more detail, unlike the general OS 1231, in the recovery OS 1241, use of most apparatuses is restricted or limited and multi-tasking is not supported, but the recovery OS 1241 has low dependence on hardware (H/W). Since dependency with respect to H/W is low, the recovery OS 1241 is unrestricted by specifications of H/W and may be used in various systems having the same OS. Since the recovery OS 1241 provides only limited functionality and does not support multi-tasking, the recovery OS 1241 may not be used for other operations other than restoration and virus removal, and thus is not exposed to virus infection due to other operations during restoration. For example, the recovery OS 1241 may be Windows PE, Embedded Linux, DOS, or Virtual Machine (VM) Host, among other types of recovery operating systems.

The primary anti-virus program 1232 is installed in the general OS 1231 and includes common-use anti-virus programs that are conventionally developed. The primary anti-virus program 1232 operates in the general OS 1231, and checks and removes virus infection of a system of the general OS 1231.

The secondary anti-virus program 1242 is installed in the recovery OS 1241 and includes common-use anti-virus programs that are conventionally developed, similar to the primary anti-virus program 1232. The secondary anti-virus program 1242 operates in the recovery OS 1241 under an environment in which access to a system area is restricted, and checks and removes virus infection of a system of the general OS 1231, similar to the primary anti-virus program 1232.

The recovery partition 124 stores a profile and log repository 1243. The primary anti-virus program 1232 and the secondary anti-virus program 1242 check and remove viruses according to a virus profile stored in the profile and log repository 1243, and update log data according to a result of virus check and removal.

In the present exemplary embodiment, the primary anti-virus program 1232 and the secondary anti-virus program 1242 share the virus profile and the log data stored in the profile and log repository 1243. Accordingly, since the secondary anti-virus program 1242 may be able to use the virus profile and the log data updated by the primary anti-virus program 1232 in the general OS 1231, each of the primary anti-virus program 1232 and the secondary anti-virus program 1242 do not need to have individual repository.

In addition, the profile and log repository 1243 is stored only in the recovery partition 124. Accordingly, even if the system partition 123 is infected and damaged by viruses, the data stored in the profile and log repository 1243 is safely maintained, and thus the data may be used when the secondary anti-virus program 1242 checks and removes the viruses.

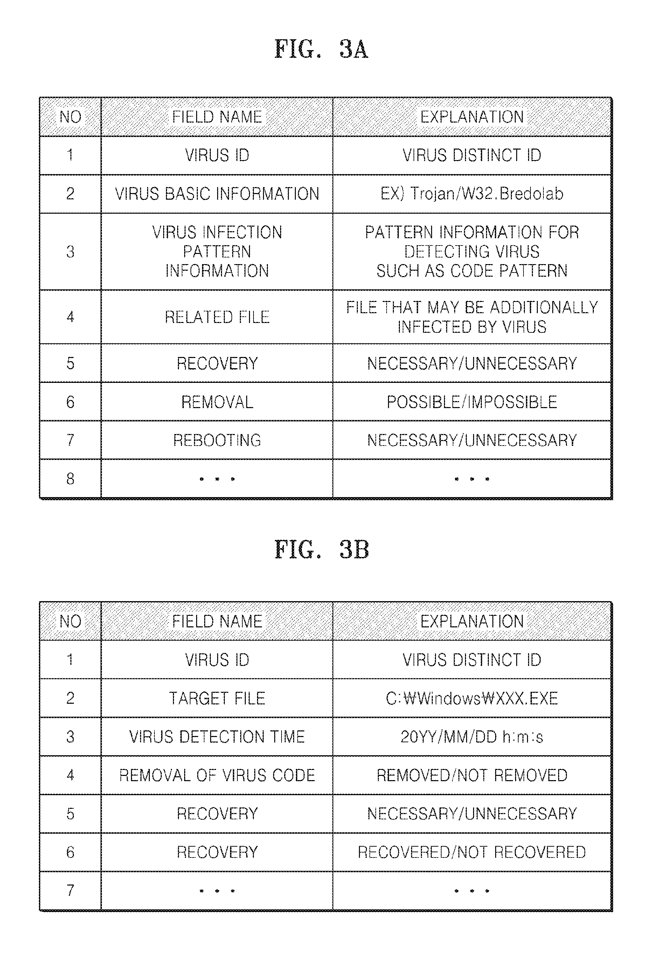

FIG. 3A is a table illustrating fields of a virus profile, according to an exemplary embodiment of the present general inventive concept. Referring to FIG. 3A, information included in the virus profile is information defined in advance through analysis of characteristics of different types of viruses. The information is updated periodically when the primary anti-virus program 1232 on the general OS 1231 is connected to a server. The table of FIG. 3A is just an example of the virus profile, and the present general inventive concept is not limited thereto, and thus the table may be changed according to the design of an anti-virus program.

The primary anti-virus program 1232 and the secondary anti-virus program 1242 check and remove viruses with reference to each field of the virus profile illustrated in FIG. 3A. For example, the fields of the virus profile includes fields representing whether recovery is necessary, whether deleting is possible, and whether rebooting is necessary. When a file is infected by a virus, the primary anti-virus program 1232 determines whether the file needs to be recovered, whether the file is able to be removed, and whether rebooting is necessary with reference to the fields of the virus profile. The primary anti-virus program 1232 also informs the system firmware 110 when it is necessary that booting of the recovery OS 1241 is to be a next booting or determines whether recovery of a file infected by a virus is necessary.

FIG. 3B is a table illustrating fields of log data, according to an exemplary embodiment of the present general inventive concept. Referring to FIG. 3B, the log data includes results of virus check and removal performed by the primary anti-virus program 1232 and the secondary anti-virus program 1242. The secondary anti-virus program 1242 determines whether a file needs to be recovered, according to the log data. For example, when there is a file that is still infected by a virus even though the log data notes that virus removal has been performed, or when the log data notes that the file is an unrecovered file that requires recovery, the secondary anti-virus program 1242 is commanded to perform a recovery operation with respect to the corresponding file.

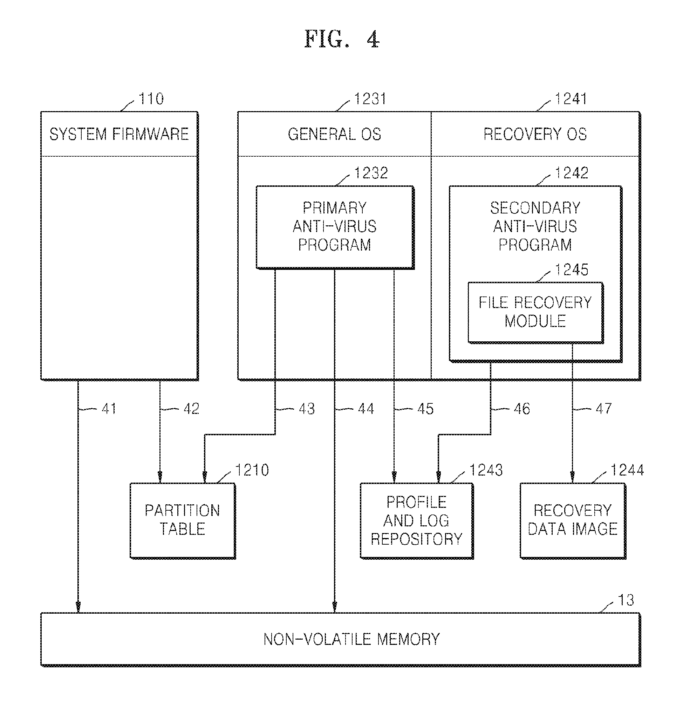

Referring back to FIG. 1, a recovery data image 1244 is a data image file including files constituting the general OS 1231. The secondary anti-virus program 1242 includes a file recovery module 1245 (see FIG. 4).

The file recovery module 1245, which is in charge of recovery with respect to the general OS 1231, like an OS recovery program, recovers a file damaged due to a virus.

In more detail, the file recovery module 1245 recovers a system partition 123 by using the recovery data image 1244 according to results of virus check and removal obtained by the secondary anti-virus program 1242. At this time, the file recovery module 1245 recovers some of damaged files of the general OS 1231 or the entire general OS 1231. That is, the file recovery module 1245 recovers the general OS 1231 by copying some or all of the files included in the recovery data image 1244, wherein the recovery is determined according to user's selection, risk of infection by the virus, and whether recovery of some of the files is possible or not.

As described above, conventionally, when a computing apparatus may not be booted to a general OS because the general OS is seriously damaged due to a virus, the virus may not be removed. Accordingly, a method of recovering the entire general OS is used. However, according to the present exemplary embodiment, it is possible to perform virus check and removal on the recovery OS 1241 with respect to some of files infected by a virus, and it is also possible to recover some of the infected files.

The CPU 14 may be a central processing unit of the computing apparatus 1. The CPU 14 controls all or substantially all of the entire system of the computing apparatus 1. Accordingly, the CPU 14 controls operations and processes of all elements of the computing apparatus 1, for example, the ROM 11, the HDD 12, and the non-volatile memory 13, among other computing elements.

When the computing apparatus 1 does not boot because the system partition 123 is infected by a virus, the CPU 14, according to the present exemplary embodiment, controls execution of the system firmware 110 to boot the computing apparatus 1 to the recovery OS 1241, and controls execution of the secondary anti-virus program 1242 so as to check and remove the virus, and to recover the system partition 123.

FIG. 4 is a block diagram illustrating operations of each OS for recovering a system of the computing apparatus 1, according to an exemplary embodiment of the present general inventive concept. FIG. 4 illustrates operations of elements of the computing apparatus 1.

The primary anti-virus program 1232 operating in the general OS 1231 accesses three memory blocks. According to an operation indicated by reference numeral 44, when the primary anti-virus program 1232 is executed after the computing apparatus 1 is booted to the general OS 1231, the primary anti-virus program 1232 initializes the boot fail count of the non-volatile memory 13 to 0.

According to an operation indicated by reference numeral 43, when it is determined that rebooting and recovery of a system is necessary, the primary anti-virus program 1232 accesses the partition table 1210 of the HDD 12 and changes a boot indicator to reboot the computing apparatus 1 to the recovery OS 1241.

According to an operation indicated by reference numeral 45, information about sensing and removal of a virus during the operation of the primary anti-virus program 1232 is stored in the profile and log repository 1243. In addition, when the information about the virus is updated, a virus profile stored in the profile and log repository 1243 is updated.

According to an operation indicated by reference numeral 41, the system firmware 110 increases the boot fail count by 1 when starting booting. The system firmware 110 checks (a value of) the boot fail count, and if the value exceeds a threshold value, the system firmware 110 changes a boot indicator to reboot the computing apparatus 1 to the recovery OS 1241 according to an operation indicated by reference numeral 42.

According to the operation indicated by reference numeral 42, the system firmware 110 determines a booting partition with reference to a boot indicator of the partition table 1210 during a general booting.

However, if a user inputs a specific key or selects the recovery OS 1241 in a booting menu, the system firmware 110 commands the computing apparatus 1 to boot to the recovery OS 1241 regardless of the boot indicator.

According to an operation indicated by reference numeral 46, the secondary anti-virus program 1242 determines whether to perform virus check and removal by analyzing log data of the profile and log repository 1243 and determines a file to be recovered.

According to an operation indicated by reference numeral 47, when it is determined that a file is to be recovered, a file recovery module 1245 extracts the file from the recovery data image 1244.

According to the operation indicated by reference numeral 46, when the virus information is additionally updated, the secondary anti-virus program 1242 updates the virus profile stored in the profile and log repository 1243.

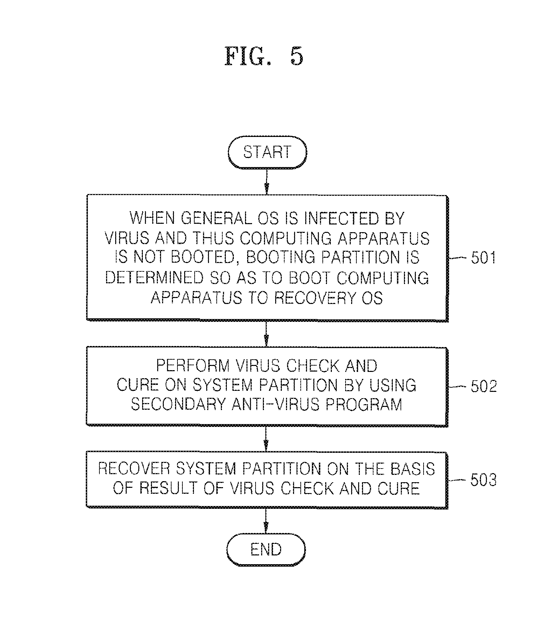

FIG. 5 is a flowchart of a system recovery method performed in the computing apparatus 1, according to an exemplary embodiment of the present general inventive concept. Referring to FIG. 5, the system recovery method according to the present exemplary embodiment includes operations performed in the computing apparatus 1 of FIG. 1. Accordingly, the description with regard to the computing apparatus 1 of FIG. 1 is applied to the system recovery method according to the present exemplary embodiment.

In Operation 501, when the general OS 1231 in which the primary anti-virus program 1232 operates is infected by a virus, the system firmware 110 determines a booting partition of the computing apparatus 1 to be such that the computing apparatus 1 is booted to the recovery OS 1241 in which the secondary anti-virus program 1242 operates. That is, in this case, the system firmware 110 determines the recovery partition 124 as the booting partition.

In this regard, the general OS 1231 is stored in the system partition 123, and the recovery OS 1241 is stored in the recovery partition 124. The system partition 123 and the recovery partition 124 are parts of the HDD 12, and the system firmware 110 is stored in the ROM 11.

In Operation 502, the secondary anti-virus program 1242 checks and removes a virus (and/or an infected booting file) with respect to the system partition 123 in which the general OS 1231 is stored.

In Operation 503, the file recovery module 1245 (see FIG. 4) recovers the system partition 123 according to results of the virus check and removal of the secondary anti-virus program 1242.

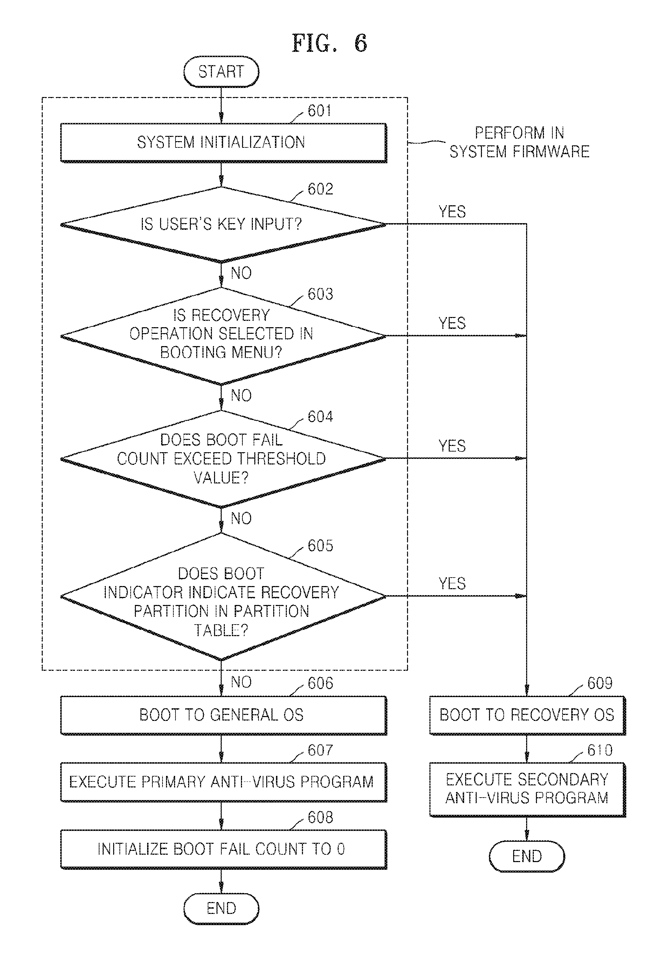

FIG. 6 is a detailed flowchart of the system recovery method of FIG. 5. Referring to FIG. 6, Operations 601 through 605 are performed in the system firmware 110.

In Operation 601, when the computing apparatus 1 is turned on, the system firmware 110 initializes a system of the computing apparatus 1.

In Operation 602, the system firmware 110 checks whether a user inputs a key. If the user input a key, the method proceeds to Operation 609, or if the user does not input a key, the method proceeds to Operation 603. In this regard, the user's input of the key is to command the computing apparatus 1 to directly boot to the recovery OS 1241. According to a further exemplary embodiment, the input of the key by the user may have to occur within a certain period of time during the period of time that system firmware 110 initializes the system of computing apparatus 1. According to further exemplary embodiments, the key can be input at any time.

In Operation 603, the system firmware 110 checks whether the user selected to boot to the recovery OS 1241 in a booting menu. If the user selected the recovery OS 1241, the method proceeds to Operation 609, or if the user did not select the recovery OS 1241, the method proceeds to Operation 604.

In Operation 604, the system firmware 110 checks whether a boot fail count exceeds a threshold value. If the boot fail count exceeds the threshold value, the method proceeds to Operation 609, or if the boot fail count does not exceed the threshold value, the method proceeds to Operation 605.

In Operation 605, the system firmware 110 checks whether a boot indicator indicates the recovery partition 124 in the partition table 1210 stored in the HDD 12. If the boot indicator indicates the recovery partition 124, the method proceeds to Operation 609, or if the boot indicator does not indicate the recovery partition 124, the method proceeds to Operation 606.

In Operation 606, the system firmware 110 determines that the computing apparatus 1 is to boot to the system partition 123 in which the general OS 1231 is stored, and thus the computing apparatus 1 boots to the general OS 1231.

In Operation 607, the general OS 1231 executes the primary anti-virus program 1232.

In Operation 608, the primary anti-virus program 1232 initializes the boot fail count to 0.

In Operation 609, the system firmware 110 determines that the computing apparatus 1 is to boot to the recovery partition 124 in which the recovery OS 1241 is stored, and thus the computing apparatus 1 boots to the recovery OS 1241.

In Operation 610, the recovery OS 1241 executes the secondary anti-virus program 1242.

FIG. 7 is a flowchart of a system recovery method when the computing apparatus 1 is booted to the recovery OS 1241, according to an exemplary embodiment of the present general inventive concept.

In Operation 701, the computing apparatus 1 is booted to the recovery OS 1241.

In Operation 702, the recovery OS 1241 checks an operation selected by a user. If the user selected a recovery operation, the method proceeds to Operation 703. If the user selected a rollback operation, the method proceeds to Operation 709. According to an exemplary embodiment, the rollback operation is performed as an alternative to the recovery operation. According to a further exemplary embodiment, the rollback operation can be used in addition to the recovery operation, as discussed in greater detail below.

In the rollback operation, after a system is recovered, a part that may abnormally operate in the system is returned to a state before the recovery. That is, the rollback operation is an option used when the system that has been recovered is returned to a state before the recovery. Accordingly, when the rollback operation is selected, the secondary anti-virus program 1242 reads an existing file from a region where the existing file is stored as a backup in advance before the recovery (Operation 709) and returns the read file to a state before the recovery (Operation 710).

In Operation 703, the secondary anti-virus program 1242 checks whether a boot fail count exceeds a threshold value. If the boot fail count exceeds the threshold value, the method proceeds to Operation 704, or if the boot fail count does not exceed the threshold value, the method proceeds to Operation 705.

In Operation 704, the secondary anti-virus program 1242 initializes the boot fail count to 0.

In Operation 705, the recovery OS 1241 checks whether a user selected a virus check operation. If the user selected the virus check operation, the method proceeds to Operation 706, or if the user did not select the virus check operation, the method proceeds to Operation 707.

In Operation 706, the secondary anti-virus program 1242 checks a virus with respect to the general OS 1231.

In Operation 707, the secondary anti-virus program 1242 determines a recovery file of the system partition 123 by analyzing log data.

In Operation 708, the file recovery module 1245 (see FIG. 4) recovers the determined file.

In Operation 709, the secondary anti-virus program 1242 determines a file on which a rollback operation is to be performed by analyzing the file previously stored as a backup.

In Operation 710, the file recovery module 1245 performs a rollback operation on the file of the system partition 123 using the file stored as a backup.

According to the present exemplary embodiment, a system is protected from a virus by coupling an anti-virus program removal function and a recovery function of an existing recovery solution, and the system may be continuously used through a restoration function and a recovery function. In addition, even when the system may not be used, the computing apparatus can be booted to a recovery OS to execute the anti-virus program. Thus, even though an anti-virus program of a general OS may not be used, virus removal and system recovery are possible. Furthermore, even though the computing apparatus may not be booted to the general OS, only files infected by a virus need to be recovered without having to recover all of the files of the general OS.

The present general inventive concept can also be embodied as computer readable codes on a computer readable recording medium. The computer-readable medium can include a computer-readable recording medium and a computer-readable transmission medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and etc. The computer readable recording medium can also be distributed over network coupled computer systems so that the computer readable code is stored and executed in a distributed fashion. The computer-readable transmission medium can transmit carrier waves or signals (e.g., wired or wireless data transmission through the Internet). Also, functional programs, codes, and code segments to accomplish the present general inventive concept can be easily construed by programmers skilled in the art to which the present general inventive concept pertains.

While the present general inventive concept has been particularly shown and described with reference to exemplary embodiments thereof, it will be understood by one of ordinary skill in the art that various changes in form and details may be made therein without departing from the spirit and scope of the present exemplary embodiment as defined by the following claims. The preferred embodiments should be considered in descriptive sense only and not for purposes of limitation. Therefore, the scope of the invention is defined not by the detailed description of the exemplary embodiments, but by the appended claims, and all differences within the scope will be construed as being included in the present exemplary embodiments.

Although a few embodiments of the present general inventive concept have been shown and described, it will be appreciated by those skilled in the art that changes may be made in these embodiments without departing from the principles and spirit of the general inventive concept, the scope of which is defined in the appended claims and their equivalents.

## Claims

1. A computing apparatus having a system recovery function, the computing apparatus comprising:
a first memory unit to store a general operating system (OS) in a system partition where a primary anti-virus program operates, and to store a recovery OS in a recovery partition where a secondary anti-virus program operates;
a second memory unit to store firmware determining a booting partition of the computing apparatus; and
a processor to control execution of the firmware to, when the system partition is infected by a virus and thus the computing apparatus does not boot to the general OS, boot the computing apparatus to the recovery OS, and to control recovery of the system partition.

2. The computing apparatus of claim 1, wherein the recovery partition stores a virus profile and log data used by the primary anti-virus program and the secondary anti-virus program.

3. The computing apparatus of claim 2, wherein the virus profile stores information about whether recovery is necessary and whether a file infected by a virus is able to be removed, according to a type of the virus.

4. The computing apparatus of claim 2, wherein the log data updates information about whether the virus is removed, whether recovery is necessary, and whether recovery is performed, according to a result of a virus check and removal performed by the secondary anti-virus program.

5. The computing apparatus of claim 1, wherein the recovery is performed only on some files infected by a virus according to a result of a virus check and removal performed by the secondary anti-virus program.

6. The computing apparatus of claim 1, wherein the secondary anti-virus program comprises a file recovery module for recovering files damaged by the virus, and the file recovery module recovers the system partition by using recovery data stored in the recovery partition according to a result of virus check and removal.

7. The computing apparatus of claim 1, wherein the recovery partition has limited access to a system, and operations other than virus check and removal and a recovery operation are limited on the recovery OS.

8. The computing apparatus of claim 1, wherein the firmware determines the booting partition according to a user's input of a specific key or a booting menu selection.

9. The computing apparatus of claim 1, further comprising a third memory unit configured as a non-volatile memory for storing a value obtained by counting the number of times booting of the general OS has failed.

10. The computing apparatus of claim 9, wherein, when the value stored in the third memory unit exceeds a threshold value, the firmware determines that the recovery partition is the booting partition.

11. The computing apparatus of claim 9, wherein the value is increased whenever the booting of the computing apparatus to the general OS fails, and when the computing apparatus is booted to the general OS, the value is initialized to 0.

12. A system recovery method in a computing apparatus, the method comprising:
when a general OS where a primary anti-virus program operates is infected by a virus and thus the computing apparatus does not boot to the general OS, determining a booting partition of the computing apparatus to be such that the computing apparatus is booted by a recovery OS where a secondary anti-virus program operates;
checking and removing the virus with respect to a system partition in which the general OS is stored, by using the secondary anti-virus program; and
recovering the system partition according to a result of the virus check and removal,
wherein the computing apparatus comprises a first memory unit to store the system partition and a recovery partition in which the recovery OS is stored, and a second memory unit to store firmware to determine the booting partition.

13. The method of claim 12, wherein the recovery partition stores a virus profile and log data used by the primary anti-virus program and the secondary anti-virus program.

14. The method of claim 12, wherein the recovery is performed only on some files infected by a virus according to a result of the virus check and removal performed by the secondary anti-virus program.

15. The method of claim 12, wherein, when a value obtained by counting the number of times booting to the general OS has failed and stored in a third memory unit exceeds a threshold value, the firmware determines that the recovery partition is the booting partition.
